# EUROPÄISCHE PATENTANMELDUNG

(11) **EP 1 248 070 A2**
(43) Veröffentlichungstag der Anmeldung: **09.10.2002**
(21) Anmeldenummer: 02002889.0
(22) Anmeldetag: 08.02.2002
(51) Int. Cl.: G01B 11/16

(54) **Verfahren zur Optimierung der Richtigkeit von theoretischen Werkstückauslegungen**

(30) Priorität: 09.02.2001 DE 10105994
(71) Anmelder: Ettemeyer AG, 89275 Elchingen (DE)
(72) Erfinder: Ettemeyer, Andreas, Dr., 89231 Neu-Ulm (DE)
(74) Vertreter: Alber, Norbert, Dipl.-Ing.

(57) **Zusammenfassung**

Verfahren zur Optimierung der Richtigkeit der theoretisch ermittelten Verformungen eines Werkstückes unter Belastung, welches schnell, einfach und kostengünstig durchzuführen ist, wobei für eine definierte Belastung und für wenigstens einen Prüfbereich auf der Oberfläche eines Werkstückes theoretisch die Verlagerungen des Prüfbereiches durch die Belastung berechnet werden, praktisch am Werkstück die bewirkten Verlagerungen mittels eines optischen, Messverfahrens gemessen wird, ein oder mehrere Parameter verändert werden, die theoretische Berechnung der Verlagerungen mit den veränderten Parametern wiederholt und überprüft wird, ob die Diskrepanz zwischen der neuen Berechnung der Verlagerungen mit den praktisch gemessenen Verlagerungen besser übereinstimmt als mit den vorherigen, noch nicht veränderten Parametern, und diese Schritte gegebenenfalls so oft wiederholt werden, bis die Diskrepanz in allen Prüfbereichen unter einem definierten Toleranzwert liegt.

## Beschreibung

### I. Anwendungsgebiet

Die Erfindung betrifft ein Verfahren zur Optimierung bei der theoretischen Auslegung eines neuen Werkstückes.

### II. Technischer Hintergrund

Um ein Bauteil oder Werkstück bei der konstruktiven Auslegung nicht zu groß und zu schwer dimensionieren zu müssen, ist es heute üblich, die maximal auftretenden Belastungen für das Werkstück zugrundezulegen, und davon ausgehend das Werkstück optimal klein und leicht oder auch nach anderen Gesichtspunkten optimal auszulegen.

Dies geschieht bisher dadurch, dass die zunächst vorgesehene Auslegung des Werkstückes theoretisch mit Hilfe computerunterstützter Simulationsberechnungen wie der Finite-Element-Methode daraufhin überprüft wird, ob das vorgesehene Werkstück mit seiner vorgesehenen Gestalt und Material den geplanten Belastungen standhalten wird.

Eine solche Computersimulation wird anschließend durch einen praktischen Festigkeitsversuch überprüft, indem ein mittels Computersimulation in der Regel schon über mehrere Verbesserungsstufen voroptimiertes Werkstück als Prototyp hergestellt und tatsächlich den vorgegebenen Belastungen unterworfen wird.

Dabei werden die auftretenden Verformungen an bestimmten Punkten der Werkstückoberfläche gemessen, beispielsweise, indem Dehnungs-Mess-Streifen (DMS) auf die entsprechenden Oberflächenpunkte aufgesetzt werden.

Je komplizierter das Bauteil ist, umso mehr DMS müssen aufgesetzt und verkabelt werden. Der diesbezügliche Aufbau eines Festigkeitsversuches kann daher nicht nur Tage, sondern Wochen benötigen.

In der Regel ergibt der Festigkeitsversuch dann immer noch an einigen Stellen zu hohe Verformungen und damit auch andere Verformungen als mittels Computersimulation vorausberechnet, so dass das Werkstück nochmals in seiner Auslegung modifiziert werden muss, und nach der modifizierten Werkstückauslegung wiederum ein Prototyp gebaut und im Festigkeitsversuch überprüft werden muss.

In der Regel werden bei komplizierten Bauteilen für die Großserienproduktion, die optimal klein und leicht ausgelegt werden sollen, beispielsweise für den Kfz-Bauund Flugzeugbau, ein bis drei Durchläufe durch den Festigkeitsversuch benötigt, was - abgesehen vom finanziellen Aufwand - alleine bereits mehrere Monate Zeitaufwand, die zwischen Konstruktionsbeginn und Markteinführung des Produktes liegen, bedingt.

Ein weiterer Nachteil dieser Methode besteht darin, dass die Dehnungsmessstreifen immer nur über eine sehr geringe Fläche, quasi nur punktuell, die Belastung des Werkstückes wiedergeben, und darüber hinaus auch die Verformung des Werkstückes nur zweidimensional, nämlich in der Ebene, bei gekrümmten Flächen der Tangentialebene, der Werkstückoberfläche wiedergeben.

Um auf die im Werkstück herrschenden Belastungen schließen zu können, ist es jedoch notwendig, einerseits über einen größeren Flächenbereich diese Verformung in der Ebene der Oberfläche zu kennen und darüber hinaus auch die Verformung in der dritten Dimension, also quer, insbesondere lotrecht, zur Werkstückoberfläche. Beides wird von der üblichen Methode mittels DMS nicht geboten.

Ein weiterer Nachteil besteht darin, die exakte Lage des Messpunktes, also des DMS am Werkstück, zu kennen. Je größer die Abweichung der Ist-Position des DMS von der Soll-Position ist, desto größer ist auch die bereits durch diese Diskrepanz bewirkte Differenz der gemessenen zu den mittels Computersimulation berechneten Verformungswerten.

Inzwischen ist es auch bekannt, mittels optischer Messverfahren, etwa dem Moirée-Verfahren, flächenhaft Verformungen zu bestimmen.

Hierbei bereitet jedoch einerseits die Umsetzung des rein optisch flächenhaft erhaltenen Signals, etwa des Streifenmusters des Moirée-Verfahrens, in absolute Daten und weiterhin der Vergleich mit den punktuell vorliegenden Verformungswerten aus der Computersimulation Schwierigkeiten. Auch die Durchführung des praktischen Belastungstests unter derartigen optischen Verfahren ist unter Umständen sehr aufwendig.

### III. Darstellung der Erfindung

### a) Technische Aufgabe

Es ist daher die Aufgabe der vorliegenden Erfindung, ein Verfahren zur Optimierung der Richtigkeit von theoretischen Werkstückauslegungen zu bieten, welches schnell, einfach und kostengünstig durchzuführen ist.

### b) Lösung der Aufgabe

Diese Aufgabe wird durch die Merkmale des Anspruches 1 gelöst. Vorteilhafte Ausführungsformen ergeben sich aus den Unteransprüchen. Durch den Einsatz eines optischen, über den Prüfbereich flächenhaft arbeitenden, Messverfahrens für die Verlagerung bzw. Verschiebung der Werkstückoberfläche im Prüfbereich aufgrund einer Belastung ist es einfacher, die örtliche Übereinstimmung mit dem entsprechenden Flächenbereich bei der theoretisch bestimmten Verlagerung zu ermitteln.

Da innerhalb des flächenhaften Prüfbereiches die Verlagerung für eine Vielzahl von Punkten innerhalb des Prüfbereiches bei der praktischen Messung erhalten werden, können auch eine Vielzahl von Messpunkten innerhalb der Prüfbereiche zwischen praktisch gemessenem und theoretisch errechnetem Wert der Verlagerung verglichen werden, so dass der Aussagewert des Vergleiches sehr viel größer wird.

Dabei ist zu berücksichtigen, dass die theoretische Auslegung des Bauteiles mittels Computersimulation meist für das gesamte Bauteil durchgeführt wird, also sowohl die Gestalt, damit auch die Kontur der Oberfläche, für das gesamte Bauteil der Simulation zugrundegelegt wird, und auch die durch Belastung im Werkstück auftretenden Spannungen von der Computersimulation meist über das ganze Werkstück berechnet wird. Damit stehen auch die aus diesen Spannungen rechnerisch abgeleiteten Verlagerungen der Oberflächenbereiche für das gesamte Werkstück zur Verfügung beziehungsweise lassen sich jederzeit für jeden gewünschten Oberflächenbereich berechnen.

Die Optimierung der berechneten Auslegung durch praktisch ermittelte Verformungen und Verlagerungswerte geht umso schneller vor sich und kann mit umso weniger Zyklen durchlaufen werden, über je mehr Einzelpunkte dieser Vergleich möglich ist. Bei den bisherigen Methoden bedeutete dies pro Vergleichspunkt einen DMS, oder anders ausgedrückt, drei am Werkstück aufgebrachte Dehnmessstreifen ergaben nur drei einem Vergleich zugängliche Punkte der Oberfläche.

Demgegenüber ergibt bereits ein Prüfbereich auf einem Werkstück eine sehr große Anzahl von Vergleichspunkten, wenn man berücksichtigt, dass ein Messkopf für die Speckle-Interferometrie eine Fläche von ca. 2,5 cm x 2,5 cm analysiert, und diese Fläche über 10.000, z. B. 65.000, Messpunkte gleichzeitig enthält, deren Verlagerung dann im Festigkeitsversuch zu beobachten ist.

Weiter muss bedacht werden, dass Computersimulation und in der Praxis ermittelte Verformung einerseits deshalb auseinanderklaffen, weil einige der Computersimulation zugrundegelegte Ausgangsparameter - die später noch erläutert werden - sich im nachhinein als nicht oder nur teilweise richtig erweisen.

Denn im Festigkeitsversuch wird mittels eines Dehnmessstreifens die Dehnung der Werkstückoberfläche an der Stelle des DMS gemessen, letztendlich also eine Verlagerung eines Punktes im Bereich des DMS gegenüber einem anderen Oberflächenpunkt im Bereich des DMS, wobei die beiden Punkte, für deren Abstand zueinander die Dehnung durch den DMS angegeben wird, nicht exakt bestimmbar sind. Mittels optischer Verfahren wie etwa der Speckle-Interferometrie wird dagegen unmittelbar festgestellt, wie sich die Relativlage der Vielzahl von Messpunkten der Oberfläche innerhalb des Prüfbereiches zueinander unter Belastung verändert. Aus einer solchen Verlagerung bzw. Verschiebung werden dann mittels Computersimulation in aller Regel zunächst die Belastungen, also Spannungen, und zwar sowohl auf der Oberfläche als auch im Inneren des Werkstückes, berechnet, beispielsweise mittels der Finite-Element-Methode.

Die auf der einen Seite ermittelte punktuelle Dehnung und auf der anderen Seite ermittelten großräumigen Verlagerungen und Spannungen müssen korreliert werden, wobei nur theoretisch ein eindeutiger Zusammenhang zwischen Spannungen und Verformungen besteht. In der Praxis ist dieser Zusammenhang weniger eindeutig durch Praxiseinflüsse wie Inhomogenität des Werkstoffes, eine von der Soll-Struktur der Oberfläche abweichende Ist-Struktur, von Oberflächenrauheit bis zu Kerbwirkungen und andere Faktoren.

Um diese Korrelationen herstellen zu können, stehen jedoch bei der Verwendung von Dehnmessstreifen nur die Informationen über die Dehnung am Messpunkt in einer oder in zwei Richtungen, jedoch immer in Richtung der Werkstückoberfläche, zur Verfügung.

Um von einer solchen Verformung auf die dort herrschenden Spannungen schließen zu können, ist es jedoch wichtig, auch die Verformung in der dritten Dimension, also quer zur Oberfläche, zu kennen.

Mit optischen Verfahren wie etwa dem Moirée-Verfahren können auch Verlagerungen in dieser dritten Dimension erkannt werden.

Auch andere optische Verfahren können eine Verlagerung in der dritten Dimension detektieren, beispielsweise die Korrelationsanalyse, insbesondere die Grauwert-Korrelationsanalyse, häufig auch bezeichnet als intensitätsbasierte Verschiebungsanalyse, digital image correlation bzw. digital image cross-correlation.

Allerdings ist dabei die absolute Verlagerung gegenüber dem Rest des Werkstückes in der Regel nicht ermittelbar.

Gemäß der Erfindung wird jedoch der Prüfkopf auf den Prüfbereich entweder aufgesetzt oder zumindest in einer ortsfesten Lage gegenüber dem Prüfbereich fixiert.

Beim Aufsetzen auf den Prüfbereich, also die Oberfläche des Werkstückes am Rande des Prüfbereiches in zum Beispiel drei Punkten, verlagert sich selbstverständlich bei einer Dehnung des Werkstückes die gesamte Werkstückoberfläche bezüglich zum Beispiel der Mitte des Werkstückes und damit zu einem ortsfesten Punkt nach außen. Zusätzlich sind jedoch in der Folge auch Änderungen der Krümmung der Oberfläche im Prüfbereich messbar: Zum Beispiel entfernt sich der mittlere Bereich des Prüfbereiches gegenüber der durch die drei Aufsetzpunkte des Prüfkopfes auf die Oberfläche gelegten theoretischen Ebene oder nähert sich ihr an, und diese Veränderung in der dritten, zur Oberfläche quer verlaufenden, Dimension ist durch flächenhafte optische Prüfverfahren, die in definierter Relation zur Oberfläche des Werkstückes eingesetzt werden, messbar.

Wird als flächenhaftes optisches Messverfahren die Speckle-Interferometrie eingesetzt, so ergibt sich daraus der zusätzliche Vorteil, dass - wie beispielsweise in der Europäischen Patentanmeldung 97 952 881 beschrieben - mittels dieses Verfahrens nicht nur die Verlagerung der Oberfläche zwischen einem Ausgangszustand und einem belasteten Zustand ermittelbar ist, sondern in einem unveränderten Werkstückzustand auch die Form der Oberfläche des Werkstückes im Prüfbereich ermittelt werden kann.

Da der Computersimulation bei der Werkstückauslegung unter anderem die Form des Werkstückes zugrundegelegt wird, lassen sich über die Ermittlung der Form der Oberfläche in den Prüfbereichen vor der Ermittlung der Verlagerung unter Belastung - durch Vergleich mit den der Computersimulation zugrundegelegten Formdaten des Werkstückes - die exakten Positionen der Prüfbereiche relativ zum Werkstück ermitteln.

Weiterhin ist es vorteilhaft, den für die Durchführung der Speckle-Interferometrie im Prüfbereich auf der Oberfläche des Werkstückes zu befestigenden Messkopf teilbar auszuführen, nämlich einen Basismesskopf und eine Messkopfhalterung, auf welcher der Messkopf in definierter Position, insbesondere formschlüssig, aufsetzbar ist.

Dadurch ist es möglich, unter Verwendung mehrerer solcher Messkopfhalterungen diese Messkopfhalterungen vorab an den Prüfbereichen des Werkstückes fest anzuordnen, und für die Durchführung der Belastungsmessungen nacheinander den Basismesskopf auf die einzelnen Messkopfhalterungen der Prüfbereiche aufzusetzen und dann jeweils das Werkstück vom Ausgangszustand aus zu belasten und dabei die Verlagerung im Prüfbereich zu messen.

Auf diese Art und Weise ist es möglich, unter geringem Zeitaufwand mit nur einem einzigen Messkopf und damit mit geringer Grundausstattung ein Werkstück an mehreren Prüfbereichen hinsichtlich der Verlagerung durch Belastung zu messen und damit die Simulationsberechnung gestützt auf viele Prüfbereiche und sehr effizient zu optimieren.

### c) Ausführungsbeispiele

Eine Ausführungsform gemäß der Erfindung ist im folgenden anhand der Figuren beispielhaft näher beschrieben. Es zeigen:
- Fig. 1:: das zu optimierende Werkstück 1,
- Fig. 1a:: eine Detaildarstellung hieraus,
- Fig. 2:: einen Schnitt durch die Figuren 1 bzw. 1a entlang der Linie II-II,
- Figuren 3:: grafische Darstellungen der Verlagerungen auf der Messfläche aufgrund der Belastung,
- Fig. 4:: eine Darstellung des Messkopfes und
- Fig. 5:: eine Prinzipdarstellung der Speckle-Interferometrie.

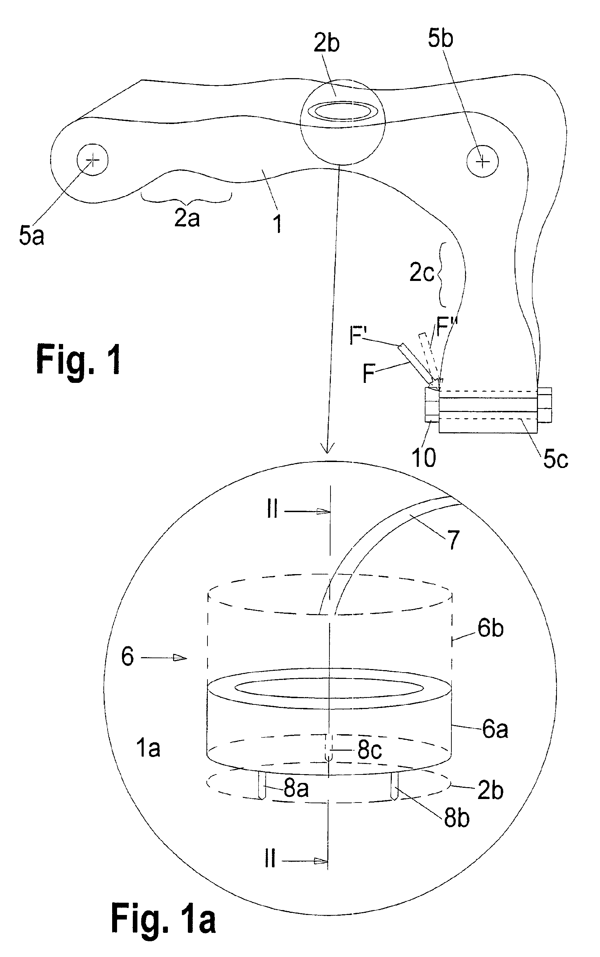

Fig. 1 zeigt ein im wesentlichen L-förmiges Bauteil 1, in diesem Falle mit drei zueinander beabstandeten Befestigungsbohrungen 5a,b,c, welches im Betrieb mittels einer durch die durch die Bohrung 5c hindurch verlaufenden Verschraubung mittels einer Kraft F bzw. F' bzw. F" belastbar sein soll, wobei in bestimmten Bereichen eine maximale Verbiegung nicht überschritten werden soll.

In diesen Bereichen, beziehungsweise in den Bereichen einer zu befürchtenden Deformation oder gar eines Bruches werden Prüfbereiche 2a,b auf der Oberfläche des Werkstückes festgelegt. Im Bereich des Prüfbereiches 2b soll beispielsweise die maximale Durchbiegung nicht größer als d sein.

Die vergrößerte Darstellung dieses Prüfbereiches in der Fig. 1a zeigt, wie auf diesen Prüfbereich 2b ein Messkopf 6 aufgesetzt wird, von dem nach unten drei ein Dreieck bildende Füße 8a,b,c abstehen, mit der der Messkopf auf der Oberfläche 1a des Werkstückes 1 aufsitzt.

Der Prüfbereich 2b, der von dem Messkopf vermessen werden kann, ist dabei rechteckig oder wie dargestellt rund und befindet sich innerhalb der Füße 8a,b,c.

Der Messkopf 6 besteht aus einem unteren, auf dem Werkstück 1 aufsitzenden Messkopfhalter 6a, der etwa die Form eines Ringes hat, und aus dem die Füße 8a,b,c nach unten vorstehen, sowie dem Basismesskopf 6b, der die die Messung durchführenden Komponenten enthält und in definierter Position auf der Messkopfhalterung 6a aufsetzbar und befestigbar ist.

Der Basismesskopf 6b ist über ein elektrisches Kabel 7 mit einer nicht dargestellten elektronischen Auswerteeinheit verbunden.

Zur Vorbereitung des Werkstückes 1 für die Messung wird auf jedem der Prüfbereiche 2a,b,c jeweils eine Messkopfhalterung 6a aufgesetzt und befestigt, wobei die Grobpositionierung auf dem Werkstück 1 relativ zu Fixpunkten, beispielsweise den Befestigungsbohrungen 5a,b,c, erfolgt.

Vorzugsweise wird dann - im unbelasteten Zustand, dem Ausgangszustand - des Werkstückes 1 der Basismesskopf 6b nacheinander auf die Messkopfhalterungen 6a der Prüfbereiche 2a,b,c aufgesetzt und mittels eines im folgenden beschriebenen Verfahrens die Kontur der Oberfläche 1a in den Prüfbereichen 2a,b,c nacheinander ermittelt.

Durch Vergleiche mit den Soll-Konturdaten des gesamten Werkstückes und damit speziell auch der Prüfbereiche 2a,b,c - die ja für die Durchführung der simulativen Berechnung der Verformung aufgrund Belastung zugrunde liegen muss - mit den praktisch ermittelten Konturdaten kann die exakte Position der Prüfbereiche 2a,b,c auf dem Werkstück 1 ermittelt werden.

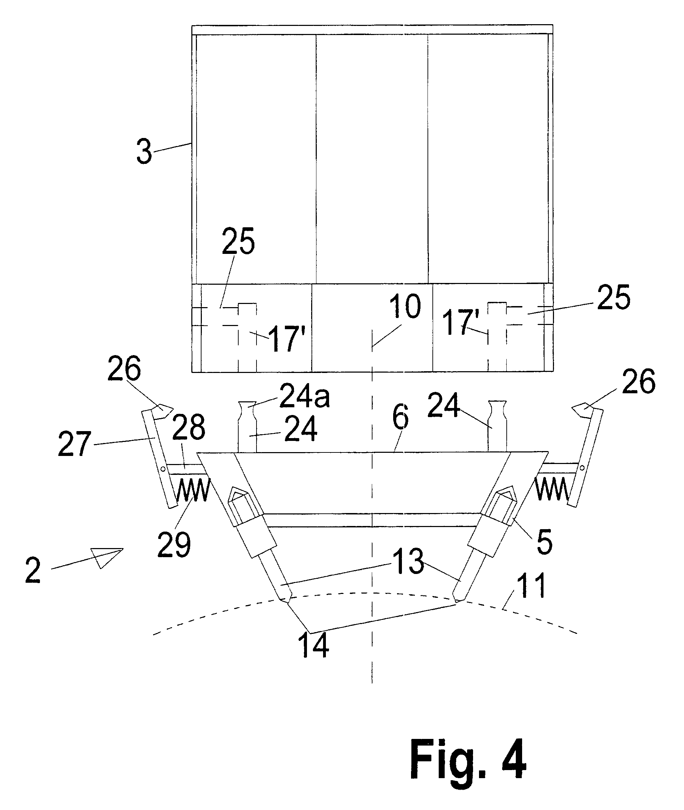

Eine Detaildarstellung zeigt Fig. 4, die später erläutert wird.

Anschließend wird unter Einbringen einer definierten Belastung, beispielsweise der Kraft F am dargestellten Einleitungspunkt und in der dargestellten Einleitungsrichtung - selbstverständlich unter Definition der Größe der Einleitungsfläche und anderer die Verformung beeinflussender Faktoren - die in den einzelnen Prüfbereichen 2a,b,c stattfindende Verlagerung der Messpunkte innerhalb der Prüfbereiche 2a,b,c mittels der Speckle-Interferometrie ermittelt und mit den laut Computersimulation berechneten Verformungen im Prüfbereich verglichen.

Ausgehend von den Verlagerungen der Oberfläche in den Messbereichen kann darüber hinaus auf die Verlagerung der übrigen Oberflächenbereiche rückgeschlossen werden, wiederum mit Hilfe von Simulationsberechnungen, da Gestalt, Materialfestigkeitswerte und weitere diese Verformung bestimmende Parameter weitestgehend bekannt sind.

Die Verlagerungen der Oberfläche in einem Prüfbereich gemäß Computersimulation und gemäß Vermessung können jeweils grafisch oder mathematisch, also in Form der Angabe der Koordinaten der einzelnen zu definierten Messpunkte, meist eines Messgitters, innerhalb des Prüfbereiches dargestellt und miteinander verglichen werden.

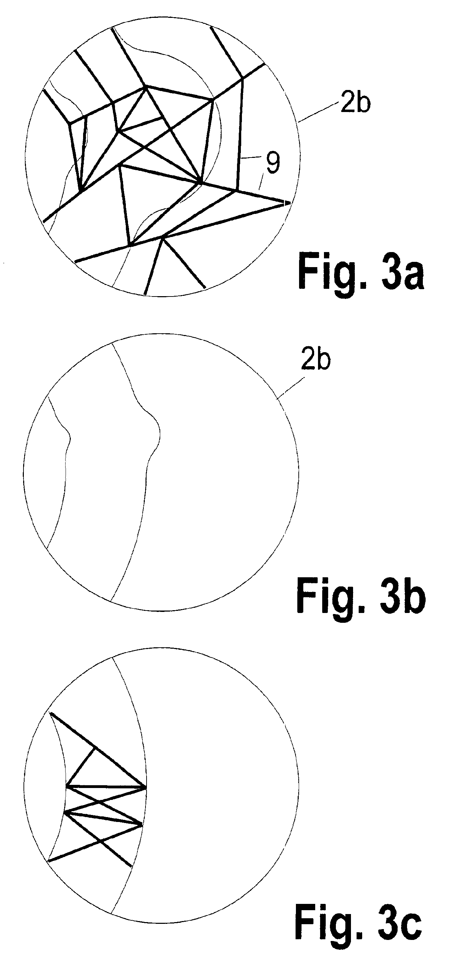

Fig. 3a und b zeigt die grafische Art der Darstellung. In Fig. 3a ist für den Prüfbereich z. B. 2b das Liniengitter 9 nach der Finite-Element-Methode, welches von farblich - in der Fig. 3a durch unterschiedliche oder fehlende Schraffur ersetzt - Abstufungen beziehungsweise farbliche Übergänge überlagert wird.

Fig. 3a stellt das mittels Computersimulation errechnete Verlagerungsbild dieses Prüfbereiches 2b dar. Demgegenüber zeigt Fig. 3b, dass bei der tatsächlich durchgeführten Verformung mittels des flächigen optischen Verfahrens, etwa der Speckle-Interferometrie, dargestellte Verlagerungsbild, wiederum in Form von Farbabstufungen und auch Farbübergängen, hier wieder dargestellt durch die Art der Schraffur beziehungsweise deren Fehlen.

Wie erkennbar sind dabei prinzipiell innerhalb des Prüfbereiches ähnlich angeordnete Schraffurzonen, bei üblicher grafischer Darstellung also Farbzonen, vorhanden, deren Übergangsbereiche beziehungsweise Grenzlinien jedoch noch eine unterschiedliche Krümmung und deren mittlere Bereiche unterschiedliche Breite aufweisen.

Bei der Computersimulation wurde jedoch von bestimmten Annahmen ausgegangen, beispielsweise einer Krafteinleitung in Größe der Kraft F und in deren Richtung. Nach Verschraubung durch die Befestigungsbohrung 5c kann in der Praxis die Kraftangriffsrichtung etwas anders, etwa in Richtung F", sein und auch der Betrag der angreifenden Kraft am Werkstück könnte - trotz gleicher Einbausituation und Umfeld - etwas größer, zum Beispiel F', sein. Auch weitere Parameter wie Definition der Grenzflächen zwischen Werkstück und kontaktierendem, belastendem Bauteil (Schraube 10), Knotendichte bei der finiten Elementeberechnung, angenommene Fertigungstoleranzen bei der Herstellung des Bauteiles und vieles mehr könnten etwas anders liegen als ursprünglich bei der Computersimulation angenommen.

Da die Berechnungsmethode bei der Computersimulation in der Regel wenig fehleranfällig ist, ist bei einem Abweichen der theoretisch ermittelten Verformungen von den praktisch gemessenen Verformungen davon auszugehen, dass vor der Simulationsberechnung festgelegte Parameter nicht zutreffend festgelegt wurden. Es wird nun versucht - vorzugsweise automatisch, mittels eines Computerprogramms selbsttätig - durch Veränderung - vorzugsweise zunächst einzelner, später einer Mehrheit von Parametern - und erneute Durchführung der Simulationsberechnung mit diesen veränderten Parametern ein Verlagerungsbild zu erreichen, beispielsweise gemäß Fig. 3c, welches der Verlagerungsdarstellung, welches aus der Praxisbelastung gemäß Fig. 3b ermittelt wurde, zumindest näher kommt.

Eine solche Veränderung eines oder mehrerer Parameter kann deshalb auch schrittweise nacheinander solange durchgeführt werden, bis das per Computersimulation ermittelte Verlagerungsbild vom praktisch gemessenen Verlagerungsbild - und zwar nicht nur der einen Prüffläche, sondern aller am Werkstück vorhandenen Prüfbereiche - so wenig abweicht, dass die Abweichungen unter einem festgelegten Toleranzwert bleiben.

Trotz der Vielzahl theoretisch veränderbarer Parameter, die vor der Durchführung einer Computersimulation festgelegt werden müssen und dementsprechend bei der vorbeschriebenen Methode zur nachträglichen Veränderung zur Verfügung stehen, ergibt sich in der Regel nur eine einzige Art der sinnvollen Veränderung von Parametern, da meist bei Änderung der falschen Parameter zwar die gewünschte Übereinstimmung der theoretischen und praktischen Verlagerungsbilder für einen einzigen Prüfbereich in Übereinstimmung gebracht werden kann, dafür die Diskrepanz bei den anderen Prüfbereichen gleich bleibt oder gar noch größer wird.

Sollte es wider Erwarten möglich sein, durch unterschiedliche Arten von Änderungen die gewünschte Übereinstimmung der berechneten und in der Praxis gemessenen Verlagerungsbilder in allen Prüfbereichen herzustellen, wird entweder die Anzahl der Prüfbereiche auf dem Werkstück erhöht oder deren Position verändert.

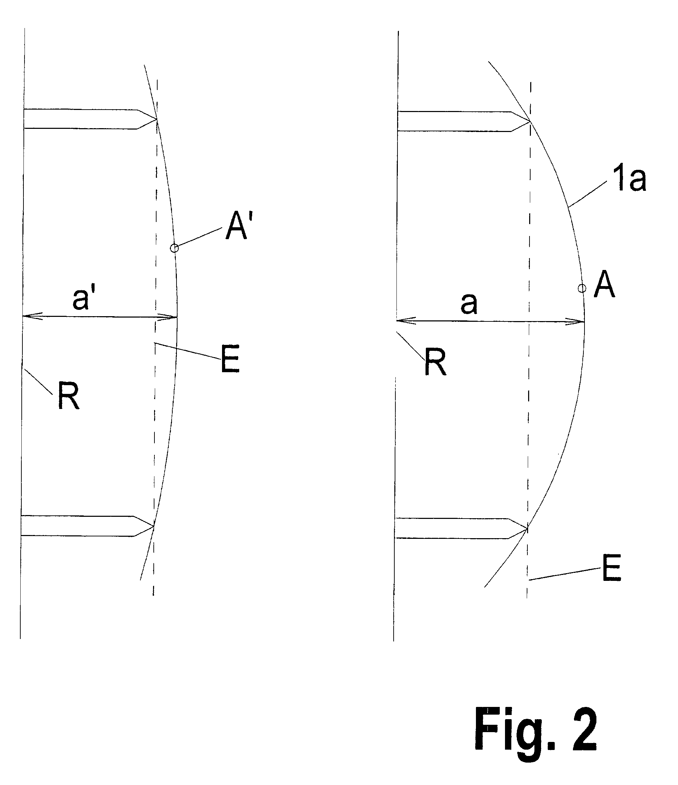

Die Schnittdarstellung der Fig. 2 zeigt weiterhin, warum es vorteilhaft ist, mit einem optischen Verfahren zu arbeiten, welches in der Lage ist, auch dreidimensionale Lageveränderungen von Punkten der Oberfläche 1a des Werkstückes 1 zu ermitteln:

Mit zweidimensionalen Messverfahren wäre es nur möglich, eine Verlagerung eines Messpunktes A entlang der Oberfläche 1a des Werkstückes in die Position A' zu bestimmen, wenn das Werkstück 1 vom unbelasteten in den belasteten Zustand übergeht. Zusätzlich kann sich dabei jedoch auch der Abstand a dieses Messpunktes zur Bezugsebene E oder in einer hierzu parallelen Referenzebene R, etwa die durch die Aufsetzpunkte des Messkopfes auf der Oberfläche 1a definiert ist, auf einen Wert a' ändern, beispielsweise durch Veränderung der Krümmung der Oberfläche 1a, wenn sich beispielsweise das Werkstück 1 wie im vorliegenden Fall stärker durchbiegt.

Eine Dehnung oder Stauchung der Oberfläche 1a entlang der Oberfläche führt ferner dazu, dass sich auch die Abstände der Aufsetzpunkte der Füße 8a,b,c zueinander verändern. Dies kann ausgeglichen werden entweder federnde Beine 8a,b,c, die hierdurch gleichmäßig gebogen werden, oder indem einer der Füße, zum Beispiel 8a, fest auf der Oberfläche 1a befestigt ist, die anderen Füße demgegenüber ihre Position verändern können, was jedoch prekär hinsichtlich einer Drehung um diesen fixen Fuß 8a ist.

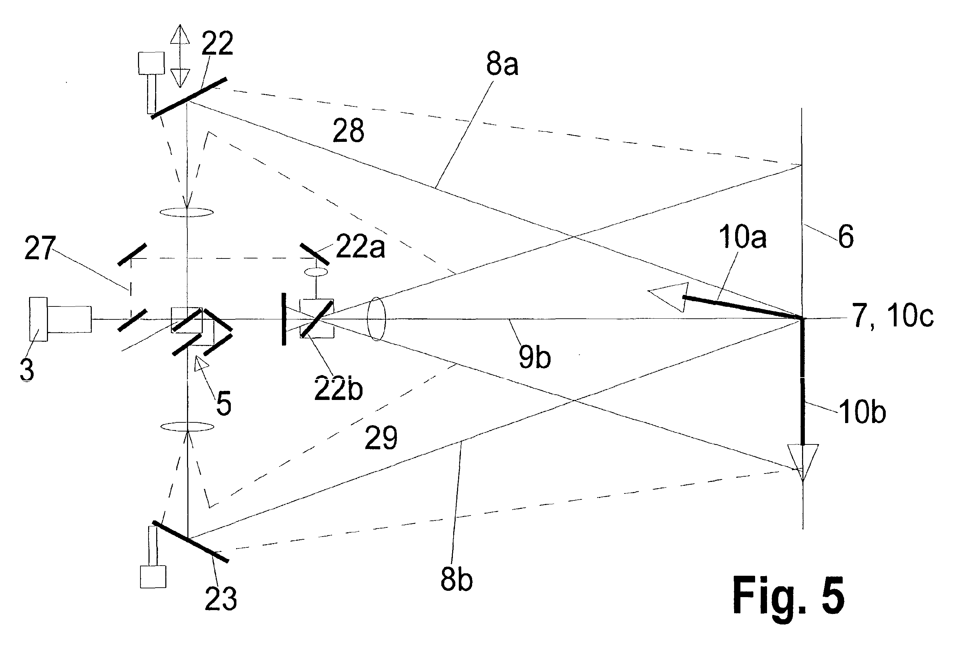

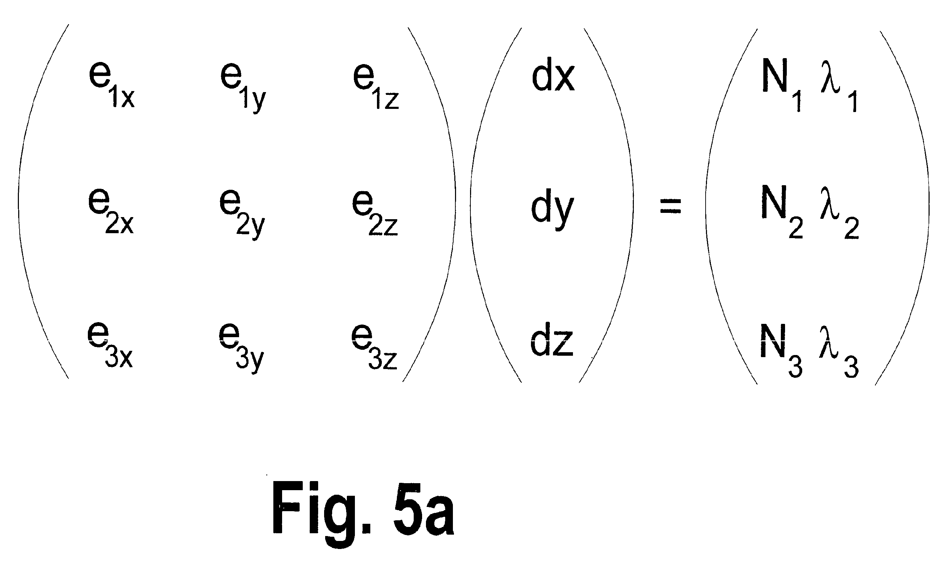

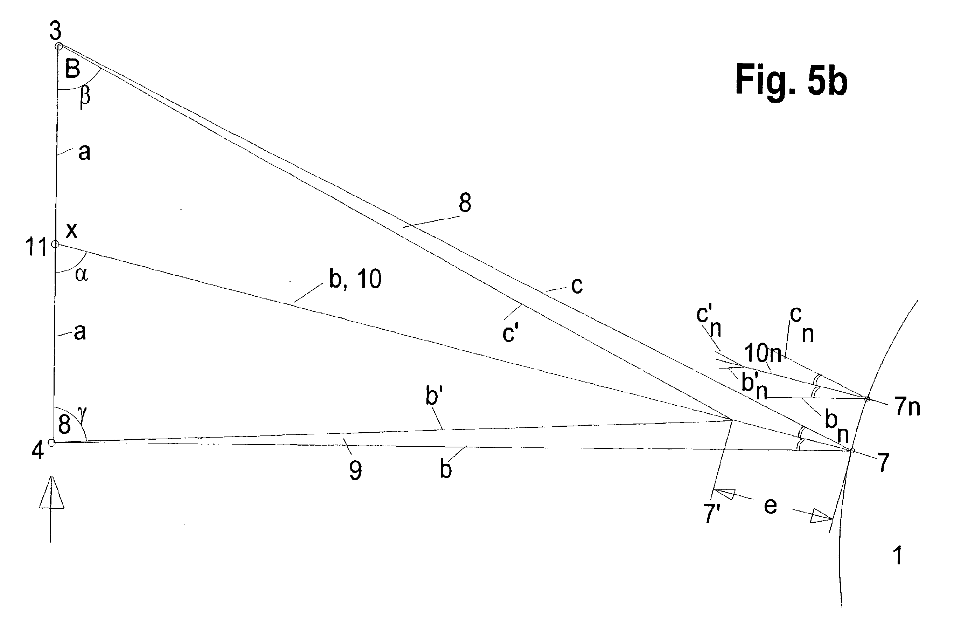

Die Ermittlung der Verlagerung eines Messpunktes A - der innerhalb des Prüfbereiches zum Beispiel 2b frei definiert werden kann und von dem bis zum 1000 Stück verteilt über den Prüfbereich definiert werden können - zeigt Fig. 5.

Fig. 5 zeigt eine Einrichtung, bei der durch zwei aus unterschiedlichen Beleuchtungsrichtungen 8a,8b erfolgende Beleuchtungen eine Verlagerung der einzelnen Messpunkt, zum Beispiel A, in einer Messrichtung 10b quer zur Beobachtungsrichtung 9b, mithin also in der Regel in Richtung der Objektoberfläche 1a, ermittelt. Die Beobachtungsrichtung 9b ist dabei in der Regel die Winkelhalbierende zwischen den beiden Beleuchtungsrichtungen 8a und 8b.

Andererseits wird die Verlagerung des gleichen Messpunktes A in einer Messrichtung 10a ermittelt, die zur Messrichtung 10b im Winkel steht und die Winkelhalbierende zwischen einer der Beleuchtungsrichtungen, zum Beispiel 8a, unter Beobachtungsrichtung 9a = 9b darstellt.

Die hierfür notwendige Referenzwelle 27 wird - zusätzlich zum Strahlteiler 5 - aus dem Lauf der Lichtstrahlen zwischen dem Laser 3 und dem Strahlteiler 5 vorzugsweise vor dem Strahlteiler 5 mittels eines halbdurchlässigen Spiegels 21 abgezweigt und mittels weiterer Spiegel 22a,b wieder direkt und ohne Objektberührung auf die Kamera 4 geleitet. Der Strahlteiler 5 hat die Aufgabe, den vom Laser 3 kommenden, vorzugsweise in Beobachtungsrichtung 9a = 9b verlaufenden Strahl mittels wenigstens eines halbdurchlässigen Spiegels aufzuteilen, und die beiden Teilstrahlen durch Umlenkung um jeweils unterschiedliche 90°-Beträge in entgegengesetzte Richtungen zur Seite umzulenken auf dort angebrachte, wiederum gesteuert verschwenkbare Spiegel 22, 23, deren Schwenkachsen quer zur Zeichenebene der Fig. 5 und damit lotrecht zu der durch die Beleuchtungsrichtungen 8a,b aufgespannten Ebene beweglich sind. Die Spiegel 22,23 leiten wiederum die Strahlen in den zueinander im in der Regel spitzen Winkel stehenden Beleuchtungsrichtungen 8a,b auf den Messpunkt A weiter. Im Strahlengang zwischen dem Strahlteiler 5 und den beweglichen Spiegeln 22, 23 ist in der Regel noch eine Streulinse angeordnet.

Wenn zusätzlich die duale Beleuchtung doppelt vorhanden ist, also nicht nur in Form der Beleuchtungsrichtungen 8a und 8b, die in der Zeichenebene der Fig. 5 liegen, sondern durch weitere, nicht dargestellte Beleuchtungsrichtungen 8c und 8d, die eine zweite Beleuchtungsebene aufspannen, welche im rechten Winkel zur Zeichenebene der Fig. 5 liegt und mit dieser die Beobachtungsrichtung 9a = 9b = 9c = 9d gemeinsam hat, ergibt sich neben der in Fig. 5 eingezeichneten Messrichtung 10b eine weitere Messrichtung 10c, die ebenfalls lotrecht zur Beobachtungsrichtung 9 und damit vorzugsweise in der Ebene der Objektoberfläche liegt, jedoch im Winkel, insbesondere rechtwinklig, zur Messrichtung 10b.

Damit ist die Verlagerung des Messpunktes A des Ausgangszustandes in den Objektpunkt 7' des Messzustandes in drei voneinander unterschiedlichen Messrichtungen 10a,b,c bekannt, wobei es egal ist, ob die Verlagerungen in die drei unterschiedlichen Messrichtungen 10a,b,c durch ein- und dieselbe Messvorrichtung oder durch getrennte Messvorrichtungen oder gar Messverfahren ermittelt wird.

Daraus lässt sich ein Gleichungssystem gemäß Fig. 5a erstellen, wobei die Komponenten e₁ₓ, e_{1y}, e_{1z}, die Verlagerungskomponenten des Messpunktes A in der ersten Messrichtung 10a sind und N1 den Betrag dieser Verlagerung in Messrichtung 10a, angegeben in der dabei verwendeten Wellenlänge λ1, ist. Analoges gilt für die zweite und dritte Zeile des Gleichungssystems für die weiteren Messrichtungen 10b und 10c.

Werden Messungen in mehr als drei verschiedenen Messrichtungen durchgeführt, ist das Gleichungssystem überbestimmt. In der Praxis dienen jedoch die vierte und jede weitere Messrichtung der Verringerung des Einflusses von Falschmessungen, Signalrauschen etc. und der Verbesserung des Messergebnisses. In der Regel wird die bei den Ermittlungen der Verlagerungen in den drei Messrichtungen 10a,b,c verwendete Wellenlänge die gleiche sein, so dass λ1 = λ2 = λ3 zu setzen ist, aber zumindest sind λ1, λ2 und λ3 bekannt.

Nach den bekannten Regeln zur Lösung eines Gleichungssystems aus drei Gleichungen mit drei Unbekannten lassen sich damit die Faktoren dx, dy, dz ermitteln, welches die Komponenten in den drei aufeinander senkrecht stehenden Raumrichtungen x, y und z sind, um welche sich der Messpunkt A aus dem Ausgangszustand in einen Objektpunkt A' im Messzustand, also im belasteten Zustand des Messobjektes, verlagert. Damit ist die relative Verlagerung des Objektpunktes in Raumkoordinaten bekannt.

Die gleiche Aussage kann für eine Vielzahl von innerhalb des Prüfbereiches, zum Beispiel 2b vorhandenen und zu definierenden Messpunkte gleichzeitig erfolgen.

Dabei ist zu bedenken, dass alle vorstehenden Überlegungen darauf basiert haben, dass die Verlagerung eines Messpunktes zwischen dem Ausgangszustand und dem Messzustand in Messrichtung kleiner als etwa die Hälfte der Wellenlänge des verwendeten Lichts sein soll. Wäre dies nicht sichergestellt, könnte es sein, dass sich die Laufwegslänge des Lichts zwischen Ausgangszustand und Messzustand nicht nur um den gemessenen Differenzwert δ, sondern zusätzlich um ein ganzzahliges Vielfaches der Wellenlängen λ unterschieden hätten. Ist der Vektor e, der im folgenden anhand der Fig. 5b erläutert wird, größer als λ/2, lässt sich die Verlagerung dann dennoch ermitteln, wenn für wenigstens einen Messpunkt im Messfenster der gesamte Verlagerungsvektor vom Ausgangszustand in den Messzustand bekannt ist, indem dieser Punkt A dann als Vergleichspunkt für Nachbarpunkte dient und diese wiederum für ihre Nachbarpunkte usw.

Um vor einer Kraftbeaufschlagung des Werkstückes 1 im Ausgangszustand die Form, also die dreidimensionale Formgebung, der Oberfläche 1a des Werkstückes 1 in den einzelnen Messbereichen 2a,b,c zu ermitteln, wird vorgegangen, wie anhand Fig. 5b erläutert:

Der Grundgedanke besteht dabei wiederum darin, durch Veränderung der Laufweglänge des Lichtstrahles von dem Laser 3 bis zum Auftreffen auf dem Messpunkt A einen Differenzwert δ zu ermitteln, wie bei Speckle-Interferometrie üblich.

Während dort der Differenzwert δ jedoch dazu dient, die Verlagerung des Messpunkte A vom Ausgangszustand in den Messzustand zu ermitteln, kann diese Verlagerungsstrecke A-A' zwischen Ausgangszustand und Messzustand gerade als bekannt vorausgesetzt werden, da durch entsprechende Veränderung der Weglänge einer der Objektwellen, beispielsweise durch Verlagerung eines der Umlenkspiegel im Strahlengang zwischen Laser und Messpunkt, und/oder gezielter Veränderung des Abstandes des Messkopfes 6 zum Objekt, diese Verlagerung e gerade bekannt ist.

Die Länge der Dreieckseite a als halber Abstand zwischen dem Laser 13 und der Kamera 14, der Winkel α am Auftreffpunkt der Beobachtungsrichtung 10a als Winkelhalbierende ist genau in der Mitte zwischen dem Laser 13 und der Kamera 14 und - aufgrund gezielter Veränderung auf seiten der Messeinheit beziehungsweise im Strahlengang der Objektwellen - ist die Verlagerung e in Messrichtung 10, also entlang der Dreiecksseite b.

Die als bekannt vorgegebene Verlagerung e eigibt wiederum im Gleichungssystem gemäß Fig. 5a einen jeweiligen Differenzwert δ, um den die vom Objekt reflektierte Welle versetzt gegenüber einem Referenzstrahl auf dementsprechenden Kamerapunkt auftrifft, und damit den Faktor d im Gleichungssystem der Fig. 5a.

Für einen vom Messpunkt A benachbarten Objektpunkt An stellt man fest, dass die Verlagerung der Messeinheit 2 um einen bestimmten Betrag in Messrichtung 10 nicht bei allen Messpunkten A, Aₙ usw. des Prüfbereiches 2 die gleiche, sondern jeweils leicht voneinander unterschiedliche, Veränderungen des Laufweges der Objektwelle bewirkt.

Dies ist nachvollziehbar, wenn man anhand der Fig. 5b erkennt, dass die Messrichtung 10a, die beispielsweise die Verbindung des in der Mitte des Prüfbereiches 2 gelegenen Messpunktes A mit der Mitte der Messeinheit, also der Winkelhalbierenden, zwischen Beleuchtungsrichtung 8 und Beobachtungsrichtung 9, ist, und die Mitte zwischen Laser 13 und Kamera 14 am Fußpunkt 11 trifft.

Die Verlagerung e ergibt für den Messpunkt A den Differenzwert δ. Für einen benachbarten Messpunkt An ist die Messrichtung 10n, in der die Verlagerung um den Betrag E erfolgte, nicht mehr exakt die Winkelhalbierende zwischen Beleuchtungsrichtung 8 und Beobachtungsrichtung 9. Folglich bewirkt die Verlagerung in Beobachtungsrichtung 10a um den Betrag e einen Differenzwert δₙ = δ₊ₙ, also einen vom Differenzwert δ des Messpunktes A um n unterschiedlichen Differenzwert. Dieser Unterschiedsbetrag n repräsentiert jedoch - bezüglich der Messrichtung 10 - den Unterschied in der Entfernung der Messpunkte A und An zur Messeinheit.

Durch massenhafte Bestimmung dieser Unterschiede werden die Unterschiede in den Abständen - insbesondere gesehen in Messrichtung 10a - der einzelnen Messpunkte A.., Aₙ.. des Prüfbereiches 2 zur Messeinheit 12, jedoch jeweils nur in Messrichtung 10a, ermittelt. Damit ist die dreidirnensionale Form der Oberfläche 1a im Messbereich 2 bestimmt. Indem zwei oder vorzugsweise sogar drei solcher Messungen aus unterschiedlichen Messrichtungen durchgeführt werden, lässt sich die Relation jeweils benachbarter Messpunkte A, .., Aₙ in den drei Raumrichtungen verfeinern.

Fig. 4 zeigt in einer Schnittdarstellung den Messkopfhalter 6a und den darauf definiert und formschlüssig aufsetzbaren Basismesskopf 6b.

In der vorderen Stirnfläche 25 des ringförmigen Messkopfhalters 6a sind die Füße 8a,b,c gleichmäßig über den Umfang verteilt eingeschraubt, so dass sie mit ihren Spitzen 24 auf der Oberfläche 1a des Werkstückes 1 aufsetzbar sind. Ist das Werkstück 1 aus einem magnetisierbaren Material, können die Füße 8a,b,c vorzugsweise also Permanentmagneten ausgebildet sein, da dann keine mechanische Befestigung auf der Oberfläche 1a notwendig ist, die aus einem Spanngurt oder ähnlichem bestehen könnte.

Von der hinteren Stirnfläche 16 ragen Passstifte 24 ab, die in entsprechende Passbohrungen 27 des Basismesskopfes 6b passen, wenn dieser auf die rückwärtige Stirnfläche 26 des Messkopfhalters 6a aufgesetzt wird.

Zusätzlich weist die Messkopfhalterung 6a eine Befestigungsmöglichkeit für den Basismesskopf 6b auf, in diesem Fall in Form von Schwenkhebeln 27, die außerhalb des Umfanges des ringförmigen Messkopfhalters 6a etwa parallel zu dessen Mantelfläche sich in Richtung der Mittelachse des Messkopfhalters 6a erstrecken und an ihrem hinteren, über die hintere Stirnfläche 26 hinausragenden, Ende, nach innen weisende Fortsätze aufweisen, die bei aufgesetztem Basismesskopf 6b in in dessen Mantelfläche vorhandene Querbohrungen 25 einrasten können. Damit diese Verbindung sich nicht selbsttätig löst, sind die Schwenkhebel 27 mittels Federn 29 in die einrastende Position der Fortsätze 26 vorgespannt.

Auf diese Art und Weise kann der Basismesskopf 6b schnell und jederzeit exakt reproduzierbar auf einem bereits am Werkstück 1 fest angeordneten und positionierten Messkopfhalter 6a aufgesetzt und befestigt werden zur Durchführung der Messungen.

### BEZUGSZEICHENLISTE

- 1: Werkstück
- 1a: Oberfläche
- 2a,b,c: Prüfbereich
- 3a,b,c: Verlagerung
- 4: Belastung
- 5a,b,c: Befestigungsbohrungen
- 6: Messkopf
- 6a: Messkopfhalter
- 6b: Basismesskopf
- 7: Kabel
- 8: Füße
- 9: Liniengitter
- 10: Messkopf
- 11: Fußpunkt

- A: Messpunkt

## Patentansprüche

1. Verfahren zum Optimieren der Richtigkeit der theoretisch ermittelten Verformungen eines Werkstückes unter Belastung,
**dadurch gekennzeichnet, dass**
für eine definierte Belastung (4) und für wenigstens einen Prüfbereiche (2a,b..) auf der Oberfläche (1a) eines Werkstückes (1)
a) theoretisch die Verlagerungen (3a,b..) des wenigstens einen Prüfbereiches (2a,b..) durch die Belastung (4) des Werkstückes (1) berechnet werden,
b) praktisch am Werkstück (1) die durch die Belastung (4) bewirkten Verlagerungen (3a,b..) des wenigstens eine Prüfbereiches (2a,b..) mittels eines optischen, über den jeweiligen Prüfbereich (2a,b..) flächenhaft arbeitenden Messverfahrens gemessen wird,
anschließend
c) ein oder mehrere der der theoretischen Berechnung der Verlagerungen (3a,b..) zugrundegelegten Parameter verändert werden,
d) danach die theoretische Berechnung der Verlagerungen (3a,b..) mit dem wenigstens einen veränderten Parameter wiederholt und
e) überprüft wird, ob die Diskrepanz zwischen mit veränderten Parametern durchgeführte Berechnung der Verlagerungen mit den praktisch gemessenen Verlagerungen besser übereinstimmt als mit den vorherigen, noch nicht veränderten Parametern, und
f) die Veränderung der Parameter, Neuberechnung der theoretischen Verlagerungen und Überprüfung der Diskrepanz gegebenenfalls so oft wiederholt werden, bis die Diskrepanz in allen Prüfbereichen (2a,b..) unter einem definierten Toleranzwert liegt.

2. Verfahren nach Anspruch 1,
**dadurch gekennzeichnet, dass**
das optische, flächenhaft arbeitende Messverfahren die Speckle-Interferometrie ist.

3. Verfahren nach einem der vorhergehenden Ansprüche,
**dadurch gekennzeichnet, dass**
einer der zu verändernden Parameter eine der durch die definierte Belastung auf das Werkstück einwirkenden Einspannkräfte ist.

4. Verfahren nach einem der vorhergehenden Ansprüche,
**dadurch gekennzeichnet, dass**
einer der zu verändernden Parameter die Lage einer oder mehrerer der Kraftangriffspunkte die durch die definierte Belastung auf das Werkstück einwirkenden Einspannkraft ist.

5. Verfahren nach einem der vorhergehenden Ansprüche,
**dadurch gekennzeichnet, dass**
einer der zu verändernden Parameter die Einspannrichtung der durch die definierte Belastung auf das Werkstück wirkenden Einspannkraft ist.

6. Verfahren nach einem der vorhergehenden Ansprüche,
**dadurch gekennzeichnet, dass**
einer der zu verändernden Parameter die vorgesehenen Fertigungstoleranzen des Werkstückes sind.

7. Verfahren nach einem der vorhergehenden Ansprüche,
**dadurch gekennzeichnet, dass**
einer der zu verändernden Parameter bei Verwendung einer Finite-Element-Methode die Veränderung der Knotendichte und/oder Knotenverteilung der Berechnungsmethode ist.

8. Verfahren nach einem der vorhergehenden Ansprüche,
**dadurch gekennzeichnet, dass**
einer der zu verändernden Parameter ein Werkstoffparamter, insbesondere das E-Modul oder die Querkontraktionszahl, ist.

9. Verfahren nach einem der vorhergehenden Ansprüche,
**dadurch gekennzeichnet, dass**
einer der zu verändernden Parameter der formelmäßige Zusammenhang zwischen Spannung und Verlagerung für das Testobjekt ist.

10. Verfahren nach einem der vorhergehenden Ansprüche,
**dadurch gekennzeichnet, dass**
einer der zu verändernden Parameter die definierten Grenzflächen, z. B. der Finite-Element-Berechnung, sind.

11. Verfahren nach einem der vorhergehenden Ansprüche,
**dadurch gekennzeichnet, dass**
mittels eines flächenhaften optischen Messverfahrens, insbesondere der Speckle-Interferometrie neben den unter der Belastungen auftretenden Verlagerungen auch die Form der Oberfläche in den Prüfbereichen ermittelt wird und die so praktisch gemessene Form benutzt wird, um die Übereinstimmung der Prüfbereiche bei der praktischen Messung und der theoretischen Berechnung herzustellen bzw. zu erleichtern.

12. Verfahren nach Anspruch 11,
**dadurch gekennzeichnet, dass**
die Übereinstimmung herbeigeführt wird durch Vergleich der durch praktische Messung erhaltenen Form der Oberfläche der Prüfbereiche mit den Konturdaten der Oberfläche des gesamten Werkstückes, die für die theoretische Berechnung der Verlagerungen zugrunde liegen.

13. Verfahren nach einem der vorhergehenden Ansprüche,
**dadurch gekennzeichnet, dass**
die praktische Messung der Verlagerungen der Prüfbereiche unter Belastung mittels Aufsetzen eines Messkopfes auf den Prüfbereich erfolgt und die Messung der Verlagerungen der Prüfbereiche nacheinander unter Umsetzen des Messkopfes von einem Prüfbereich zum anderen erfolgt.

14. Verfahren nach einem der vorhergehenden Ansprüche,
**dadurch gekennzeichnet, dass**
der Messkopf eine von der Messkopfbasis abnehmbare Messkopfhalterung umfasst, die in definierte Position, insbesondere in Kontakt, gegenüber der Oberfläche des Werkstückes gebracht wird, und dass vor der Durchführung der Messungen der Verlagerungen unter Belastung an allen Prüfbereichen Messkopfhalterungen angeordnet und befestigt werden und zwischen den einzelnen Messkopf lediglich die Messkopfbasis von der Messkopfhalterung des einen Prüfbereiches zu der des anderen Prüfbereiches umgesetzt wird.

15. Verfahren nach einem der vorhergehenden Ansprüche,
**dadurch gekennzeichnet, dass**
bei der praktischen Belastung des Werkstückes auch die Verlagerungen der Werkstückoberfläche quer zur Oberfläche innerhalb des Prüfbereiches, insbesondere relativ zu den Kontaktpunkten zwischen Prüfgerät und Werkstückoberfläche, ermittelt werden.

16. Verfahren nach einem der vorhergehenden Ansprüche,
**dadurch gekennzeichnet, dass**
pro Werkstück mindestens drei voneinander beabstandete, insbesondere nicht auf einer Linie liegende, Prüfbereiche (2a,b,c) gewählt werden.
